# EUROPEAN PATENT SPECIFICATION

(11) **EP 1 333 722 B1**
(45) Date of publication and mention of the grant of the patent: **01.03.2006**
(21) Application number: 00981626.5
(22) Date of filing: 14.11.2000
(51) Int. Cl.: A21B 1/48, B65G 15/38

(54) **CONVEYOR BELT FOR TUNNEL OVENS**
FÖRDERBAND FÜR EINEN TUNNELOFEN
TAPIS ROULANT POUR FOUR TUNNEL

(43) Date of publication of application: 13.08.2003
(73) Proprietor: Sa Car Forni Srl., 84081 Baronissi (SA) (IT)
(72) Inventor: CAROCCIA, Saverio, I- Salerno (IT)
(86) International application number: PCT/IT2000/000461
(87) International publication number: WO 2002/039818

(56) References cited:
- DE-A- 19 624 445
- FR-A- 2 685 607

## Description

This invention is a conveyor belt for transporting bakery products inside a tunnel oven.

This advancing-transporting device is composed of an assembly of conveyor belts of diverse types capable of carrying the products to be baked through the various areas of the oven chamber. The conveyor belt of the baking area is characterised by the surface made up of special parallelepipedon bodies placed transversally and opportunely spaced one beside the other, and which in turn are made up of elements made of different materials, more precisely, small bars made of refractory material and a steel supporting and housing device for the bars .

### Technical status

There are many different types of tunnel oven used for baking foodstuffs such as bread or other similar products, all of which are equipped with a large baking chamber with radiant heating elements (electric resistances) and a continuous conveyor belt system composed of a series of single rollers or small transporter bars that are laid transversally in regard to the oven channel and therefore perpendicularly to the direction in which the products that are to be baked are transported; the belts are activated through special systems and devices, for example, through a chain or roller transmission. These conveyor belts have an upper branch that serves to transport the products that are to be baked through the baking chamber with an almost uniform forward motion.

If the conveyor belt is made of steel and is a single continuous belt that runs through the entire chamber of an oven heated by electric resistances, it will be heated in the baking chamber and cooled in the entering and exiting areas, and is therefore subject to a certain amount of thermal stress, which in turn creates the necessity for frequent, expensive maintenance work.

In order to eliminate this inconvenience, in the past tunnel ovens with conveyor belts composed of small bars of refractory material have been proposed, for example, as in the American Patent US5141379. The adoption of this material reduces the weight of the conveyor belt, makes it more resistant to brusque changes in temperature and also capable of supporting higher temperatures. Moreover, these bars are more resistant to attack by chemical agents. Unfortunately, the bars are made entirely of low elasticity refractory material; therefore, at the temperatures found in ovens with electric resistances, and with the mechanical stress caused by normal functioning, they become fragile and often break, especially in the areas where they are connected to each other and to the relative pulling devices. In Germany Patent DE-A-19624445 the belt that extend through the tunnel of the oven is provided with parallelepipedon surfaces from a refractory material which are guided an double chain. In the FR-A-2685607 patent, there is a description of a transport system of trays, is always kept in the same horizontal position; the refractory cement slab rest upon a framework made of an unidentified material. Therefore the transport system described in said patent is not comparable to a classic conveyor belt with only one horizontal transport plane, in which the classic capsizing of the plane occurs.

### The aims of this invention

The aim of this invention is to eliminate the inconveniences of the techniques already used to realise an automatic advancing-transporting system for bakery products that are to be baked, composed of three conveyor belts placed in line one after the other along a route through a tunnel oven to make up a loading area, a baking area and a cooling area, in which the conveyor belt of the a baking area, closed inside the baking chamber of a tunnel oven, thus reducing heat dispersion and the mechanical stress to which conveyor belts are normally subject, is composed of special parallelepiped bars laid parallel to each other, transversally and opportunely spaced, made of different elements, each of which is used in such a way that each type of material fully exploits the advantages of using refractory material together with steel;

Another aim of this invention, in concordance with what is described in the preceding paragraph, is to realise a supporting device and housing for special small bars to be used as a part of conveyor belts made of refractory material for use in tunnel ovens.

Another aim, associated with the advantages of the approach delineated in the preceding paragraphs, is to obtain a tunnel oven in which heat dispersion is particularly diminished, which allows cooking times to be reduced without detracting from the quality of the finished product or the flavour of the food that has been-baked, will always ensure uniform baking on all surfaces of the product, that can be used in comfort and is easy to maintain.

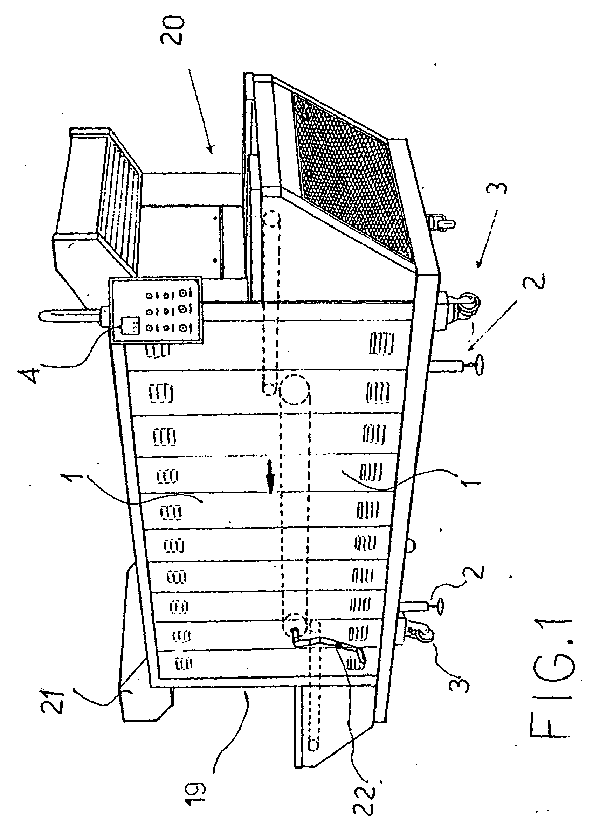

A description of the attached drawings and the way in which this invention is realised
Figure 1 is a three-dimensional view of the complete tunnel oven, with the route taken by the conveyor belts traced in dotted lines.

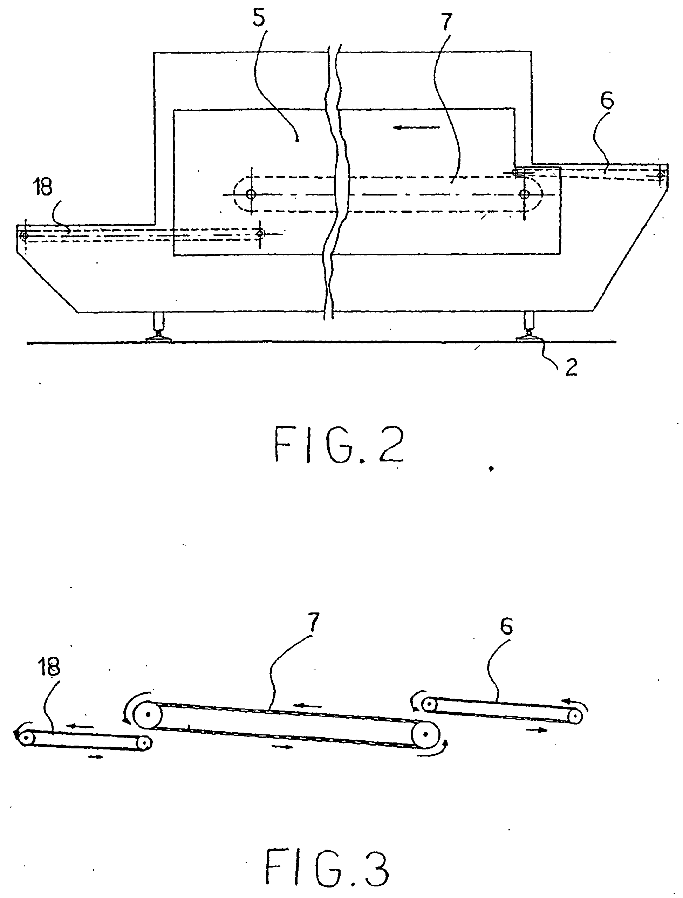

Figure 2 is a lateral view of the oven showing how the three conveyor belts are aligned (traced in dotted lines) in the oven chamber.
Figure 3 is a lateral view of the three conveyor belts, demonstrating their planned movement.

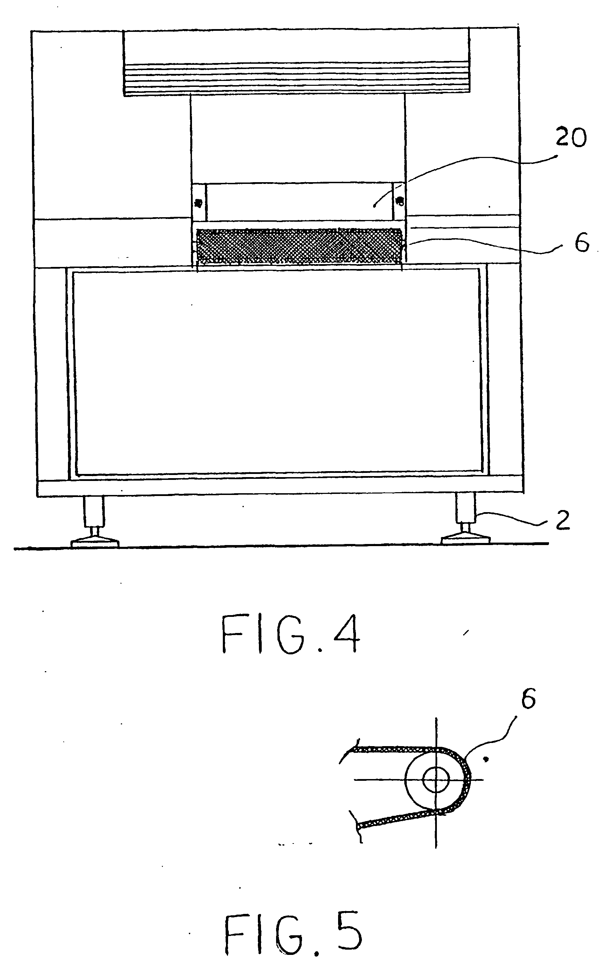

Figure 4 is a front view of the entering conveyor belt, which is made of steel wire mesh.
Figure 5 is a diagram of a detail of the pulling roller that activates the wire mesh belt.

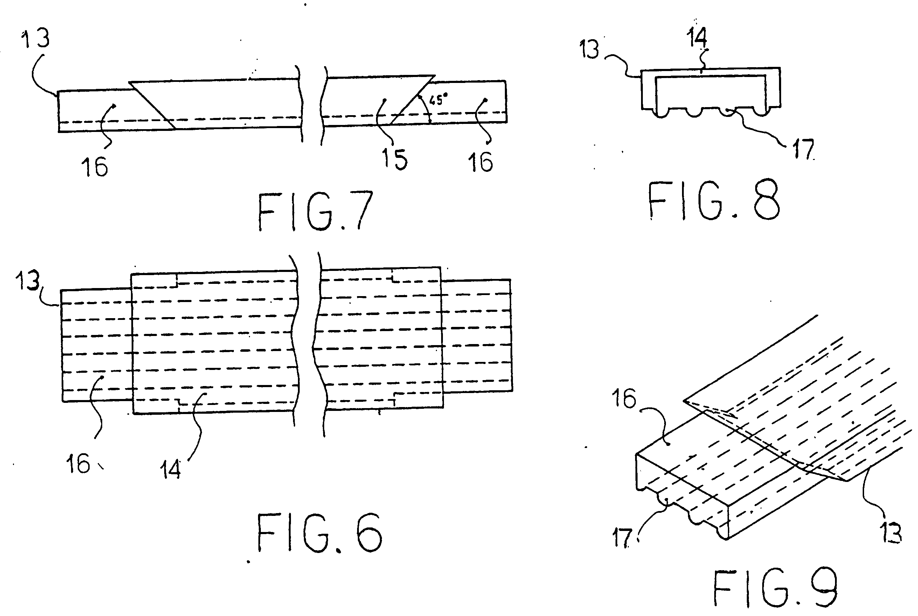

Figure 6 is a diagram of the conformation of a small bar made from refractory material.
Figure 7 is a lateral view of the conformation of a small bar made from refractory material.
Figure 8 is a front view of the conformation of a small bar made from refractory material.
Figure 9 is a three dimensional view of one end of a small bar made from refractory material.

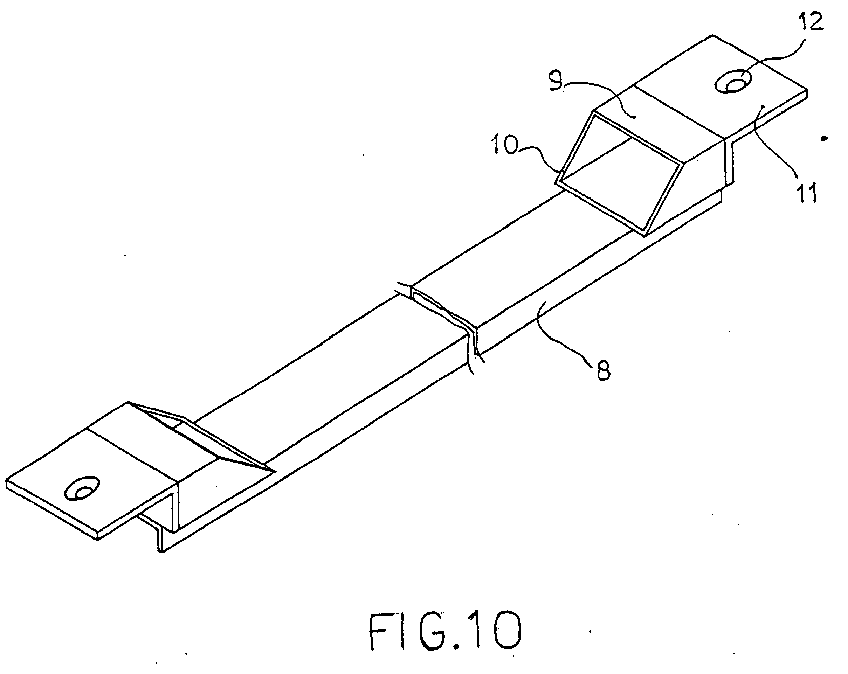

Figure 10 is a three dimensional view of the supporting device and housing for the small bars made from refractory material.

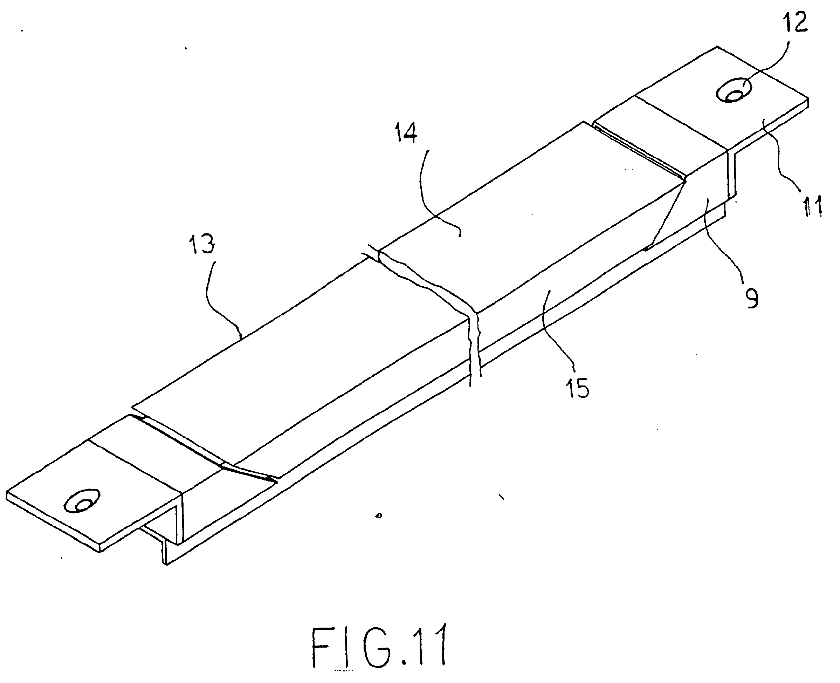

Figure 11 is a three dimensional view of the assembly of the supporting device with a small bar attached to it.

In the form of realisation of this invention described above and also in the attached drawings,(1) indicates the external lateral panelling of the oven, which can be easily removed to allow maintenance work to be carried out, with four feet (2) equipped with wheels (3) that can be regulated to attach the oven to the floor or to allow the oven to be moved easily around the factory floor to a different location. A functional switchboard (4) that can be oriented in various directions permits the operator to work from diverse positions; the temperature is set by a digital thermo regulator situated on the switchboard (4) which is also equipped with a display for visualising the temperature (max.700 C.) inside the baking chamber; the electric power, commutable from 24 to 50 KW, can be regulated both at roof and the bedplate levels of the oven in order to adapt the temperature more precisely for the product that is to be baked.

The products to be baked enter the baking chamber (5) on a steel wire mesh conveyor belt that starts at the loading area where the products enter the oven. This conveyor belt is cooled by a fan of the open vane type.

The baking chamber is equipped with heating elements composed of electric resistances situated directly above and below the baking area and which are adequately covered with insulating material so as to limit transportation of heat to the outer parts of the oven.

Situated where the products to be baked reach the limit of their forward motion on this first conveyor belt, is a second conveyor belt (7) composed of an assembly of steel supports and elements in refractory material laid on the former in order to ensure that the products placed on the conveyor belt are baked evenly as they transit through the oven chamber or baking area, given that they cannot be turned and therefore the same surface is always exposed to the heat sources. An assembly conceived in this way also ensures greater resistance to mechanical stress on the part of the conveyor belt itself.

Each of the supporting elements is made up of a parallelepipedon bar in steel C-section (8); a hollow seating (9) with a quadrangular cross section, the mouth of which is tapered to a sharp edge (10), which is soldered to each end of the bars and the rear part of which is equipped with an L-cross-section plate (11); on the free surface of this there is a hole (12) into which a fastening element can be inserted. The ends of the bars (13) are inserted into these housings (9). The bars (13) are cylindrical and are made of specially shaped refractory material in a single piece, the central portion of which is rectangular (14); the lateral surface (15) of the bar is in the shape of a trapezoid isosceles with 45 oblique margins and two rectangular shaped ends (lv) that are slightly smaller than the central part (14).

The lateral surfaces (15) and (16) and the upper surface (14) of these bars are all flat, while the lower surface is shaped with a series of embossments (17) arranged in a semicircle.

The baked product exits the oven on a further wire mesh conveyor belt (18) situated at a lower level in respect to the preceding conveyor belt (7) at the opposite end to the loading area (20) of the oven. At the top of the exiting or unloading (19) end of the oven there is an oven hood(21) which cools the products as they arrive at the unloading area.

It is possible to vary the transportation speed of the products to be baked as well as the type of baking required in order to ensure that the products are in the oven baking chamber for an optimum length of time, according to the product and the type of baking required.

The mechanical handle emergency device (22) situated on one side of the oven is particularly useful as it permits the user to extract the product from the oven in case of a power blackout.

As can be clearly seen the invention fulfils its objectives completely. All the details can be substituted according to necessity by other elements with the same technical characteristics, essentially the dimensions and shapes can be varied according to the user's requirements.

## Claims

1. An automatic advancing-transporting system for food products to be baked, composed of three conveyor belts placed in line one after the other along a route through a tunnel oven to make up a loading area, a baking area and a cooling area, in which a first conveyor belt (6), made of steel wire mesh, is situated at the front end of the oven where the products to be baked are placed before being transported into the baking chamber (5), a second steel wire mesh conveyor belt(18) on the opposite side of the oven to the loading area, and on which the baked products come out of the oven through the exit(19), and **characterised by** the fact that: the surface of the third conveyor belt (7) made up of parallelepipedon bodies placed transversally and opportunely spaced one beside the other, and which in turn are made up of elements made of different materials, more precisely: small bars (13) made of refractory material and a steel supporting and housing device, for the bars (13), made up of a parallelepipedon bar in steel C-section (8), at both ends of which is soldered a rectangular cross-section hollow housing (9).

2. An automatic advancing-transporting system for food products to be baked as in claim 1) **characterised by** the fact that the mouth of the rectangular cross-section hollow housing (9) is tapered to a sharp edge (10), and the rear end of which is equipped with an L cross-section plate (11) on the free surface of which is a hole (12) into which a fastening element can be inserted.

3. An automatic advancing-transporting system for food products to be baked as in claims 1) and 2) **characterised by** the fact that the ends (16) of the bars (13) made of refractory material can be inserted into each housing (9).

4. An automatic advancing-transporting system for food products to be baked as in claims 1) and 3), **characterised by** the fact that the bars (13) are composed of a parallelepipedon bar in refractory material, in a single specially shaped piece, composed of a rectangular central part (14), the lateral surface (15) of which is in the shape of a trapezoid isosceles with 45 degree oblique margins, and two rectangular, ends (16) that are slightly smaller than the central part (14).

5. An automatic advancing-transporting system for food products to be baked as in claims 1) and 4), **characterised by** the fact that the lateral and upper surfaces of the bars (13) are flat, while the lower surface is shaped with a series of embossments (17) arranged in a semicircle.

## Revendications

1. Un système de transport et avancement automatique pour produits alimentaires a cuire, composé de trois rubans de transport placé dans la ligne une après l'autre le long du four pour composer un secteur de chargement, un secteur de cuisson et un secteur de refroidissement, dont un premier ruban transporteur (6) est en réseau d'acier et il est posé à l'extrémité du four sur lequel les produits à enfourner sont posés et traverse d'lui sont introduits dans la chambre de cuisson (5) dont il est posé un second ruban de transport (18) sur le côté opposé à celui de chargement du four et sur lequel le produit cuit fuit du four à travers la bouche de déchargement (19) **caractérisé** du fait que la surface de le troi ruban (7) formé de corps parallélépipèdes allongés en sens travers opportunément distancés l'une derrière l'autre, qui à eux tourne sont constitués d'un ensemble d'éléments de matériels différents constitués des tuiles (13) en matériel réfractaire et d'un dispositif en acier de je supporte et logement des tuiles (13); constitués d'un bar en acier profilé à C (8) a un dont les deux extrêmes est placé pour soudure siège creux à une forme quadrangulaire (9).

2. Système de transport et avancement automatique pour produits alimentaires a cuire comme à réclamation 1) **caractérisé** du fait que l'embouchure de la siège creux quadrangulaire (9) est contracturée à je glane (10) et la partie postérieure provision d'une plaque profilé à L (11) sur duquel libre est gagné un trou (12) dans lequel on place un élément de fixation .

3. Système de transport et avancement automatique pour produits alimentaires a cuire comme à réclamation 1) et 2) **caractérisé** du fait que j'entre des sièges (16) on va insérer l'extrémité de la siège creux quadrangulaire (9) des tuiles (13) réfractaire .

4. Système de transport et avancement automatique pour produits alimentaires a cuire comme à réclamation 1) et 3) **caractérisé** du fait que les tuiles (13) sont constituées de barres cylindriques dans un unique moreau spécialement conformé, dans lequel an distingue un parte central a plante rectangulaire (14) dont la surface latéral (15) est forme à un trapèze isocéle avec des marges obliques à 45° et deux extrémités (16) à plante rectangulaire légèrement de largeur inférieure par rapport à la portion central (14).

5. Système de transport et avancement automatique pour produits alimentaires a cuire comme à réclamation 1) et 4) **caractérisé** du fait que les visages latéraux celle supérieure des tuiles (13) sont plans pendant que celle-là inférieure est formé avec une série de bonds (17) conformés à demi-cercle.

## Patentansprüche

1. Ein automatisches Fördersystem für Backwaren, bestehend aus drei in Linie angeordneten Förderbändern die sich ergänzend den Belade-, Back- und Kühlbereich ergeben; die Förderbänder transportieren das Backgut durch den Tunnelofen; auf das erste Förderband (6), bestehend aus Stahldraht, am Eingang des Tunnelofens, wird das Backgut aufgeladen; dann wird es in die Backkammer (5) transportiert. Ein zweites Stahldrahtförderband (18) befindet sich am Ausgang des Ofens (19); die Oberfläche des drei. Förderbandes (7) besteht aus Parallelflachkörpern, kreuzweise und nebeneinander angeordnet; diese bestehen aus verschiedenen Materialien: Fliesen (13) aus feuerfestem Material, Stahlhalterungen für die Fliesen (13), gefertigt aus Parallelflachen Tafeln aus Stahl C-Sektion (8); an beiden Enden ist eine rechteckige Kreuzlochsektion angeschweißt (9).

2. Ein automatisches Fördersystem für Backwaren wie in Abb. 1) ist charakterisiert wie folgt: die Öffnung der rechteckig angeordneten Kreuzlochsektion der Verpackungssektion läuft spitz auf die scharfe Kante (10) zu und das hintere Ende ist ausgestattet mit einer L-kreuz Trennscheibe (11), die ein Loch auf der freien Außenseite (12) hat und in dem sich ein Verschlusselement befindet.

3. Ein automatisches Fördersystem für Backwaren wie in Abb. 1) u.2) ist **gekennzeichnet dadurch, dass** die Enden (16) der Fliesen (13) die aus feuerfestem Material sind, in jeder Kreuzlochsektion montiert sind (9).

4. Ein automatisches Fördersystem für Backwaren wie in Abb. 1) u.3) ist auch **gekennzeichnet dadurch, dass** die Fliesen (13) aus einer Parallelflachen Tafel, die aus feuerfestem Material besteht, sich in einem einzelnen speziellen Formteil befinden. Dieses wiederum ist zusammengesetzt aus: einem rechteckigen Mittelteil (14), einer glatten Seitenfläche (15) auf der sich in einer gleichschenkligen Trapezform angeordnete Schrägränder 45 grad. befinden und 2 rechteckigen Enden (16), die schmaler und kleiner ist als der Mittelteil (14).

5. Ein automatisches Fördersystem für Backwaren wie in Abb. 1) u.4) ist **gekennzeichnet dadurch, dass** die seitlichen u. obere Fläche der Fliesen (13) flach sind, während die untere Seite eine Reihe von Erhebungen (17) aufweist, die in Halbkreisen angeordnet sind.
